# EUROPEAN PATENT APPLICATION

(11) **EP 2 490 504 A1**
(43) Date of publication of application: **22.08.2012**
(21) Application number: 11732638.9
(22) Date of filing: 04.01.2011
(51) Int. Cl.: H04W 88/08

(54) **TRANSMISSION METHOD FOR AUXILIARY CARRIER PAIRING INFORMATION, NODE B AND SYSTEM FOR IMPLEMENTING TRANSMISSION**

(30) Priority: 15.01.2010 CN 201010004830
(71) Applicant: ZTE Corporation, Shenzhen city, Guangdong 518057 (CN)
(72) Inventor: HE, Meifang, Nanshan Guangdong 518057 (CN); SHI, Lirong, Shenzhen Guangdong 518057 (CN); CHENG, Xiang, Shenzhen Guangdong 518057 (CN); YANG, Li, Shenzhen Guangdong 518057 (CN); CUI, Yingchuan, Shenzhen Guangdong 518057 (CN)
(74) Representative: Krauns, Christian
(86) International application number: PCT/CN2011/070026
(87) International publication number: WO 2011/085648

(57) **Abstract**

The present invention discloses a method, a NodeB and a system for transmitting pairing information of auxiliary carriers. The method comprises: during the process of controlling a terminal which uses a multi-carrier high-speed packet access technique, a NodeB to which the terminal belongs setting pairing information of an uplink auxiliary carrier and a downlink auxiliary carrier of a auxiliary service enhanced dedicated channel cell for the terminal, and transmitting the paring information to a radio network control entity through control signaling transmitted via an Interconnection of type (IUB) interface. The present invention can implement flexible configuration for the uplink and downlink auxiliary carriers through signaling based on the IUB/IUR interface.

## Description

### Technical Field

The present invention relates to radio communication systems, and in particular, to a method, a NodeB and a system for transmitting pairing information of auxiliary carriers in a multi-carrier high-speed downlink packet access technique.

### Background of the Related Art

In wireless communication systems, a wireless link, which is a logic connection between a terminal and an access point of a radio access system, is generally comprised of one or more radio bearer transmissions in physical implementation. There is at most one wireless link between the terminal and the access point of the radio access system (generally refers to a cell). A wireless link identifier is used to identify the wireless link. Each wireless link associated with the terminal has a unique wireless link identifier. Frequency information of a carrier of a cell is represented by a Universal Telecommunication Radio Access (UTRA) Absolute Radio Frequency Channel Number (UARFCN for short hereinafter).

The Interconnection of type B (IUB) interface is a logic interface between a Radio Network Controller (RNC for short) and a NodeB. An IUB interface protocol framework has two functional layers, i.e., a radio network layer and a transport network layer. A NodeB Application Part (NBAP), which is a part of the radio network layer, accurately and completely specifies functional behaviors of the NodeB. The basic process of the NBAP is divided into a common process and a special process. The common process is applied to signaling independent of a particular terminal existing in the NodeB or to a particular terminal context initialization request process, including setting up the first wireless link of the terminal and selecting a service termination endpoint. The special process refers to a process associated with context of a certain terminal. When the radio network controller allocates a service terminal node to the terminal through the common process, each subsequent signaling associated with the terminal will be exchanged through a dedicated control port of the node using the special process, including adding, releasing and re-configuring the wireless link for the terminal.

The Interconnection of RNC (IUR) interface is an interface used by the radio network controller to exchange signaling and data with other radio network controllers, and is the tie of interconnection between radio network subsystems. Different radio network subsystems can be connected together via the IUR interface, and complete mobility management of the terminal connected to the radio network controller across the radio network subsystems through a dedicated protocol-Radio Network Subsystem Application Part (RNSAP), including functions, such as handover between radio network subsystems, radio resource processing and synchronization, etc. When a terminal sets up a connection to a radio access network and generates a soft handover at the IUR interface, resources of more than one radio network controller will be used. There are three primary functions of the IUR interfaces: basic mobility management between radio network controllers, a service procedure supporting a common channel, a service procedure supporting a dedicated channel. These service procedures are the most basic functions of the IUR interface, and radio network controllers of different manufacturers is necessarily able to implement the compatibility of these service procedures; otherwise, the interconnection and intercommunication between IUR interfaces can not be achieved at all.

The 3rd Generation Partnership Project (3GPP) introduces Dual Cell High-speed Downlink Packet Access (DC-HSDPA) in Rel-8. In order to achieve the DC-HSDPA function, a radio network control entity allocates an additional high-speed cell information wireless link setup information element to a NodeB having the capability of processing the DC-HSDPA through the IUB interface. The information carried by the additional high-speed cell information wireless link setup information element primarily includes a high-speed physical downlink shared channel wireless link identifier, a cell identifier, high-speed downlink shared channel auxiliary service information and a total maximum bit rate of the terminal.

3GPP introduces Dual Cell High-speed Uplink Packet Access (DC-HSUPA) in Rel-9 to increase uplink bandwidth using two adjacent uplink carriers (a primary carrier and an auxiliary carrier). The uplink primary carrier and the uplink auxiliary carrier set their respective E-DCH Dedicated Physical Data Channel (E-DPDCH for short, wherein the E-DCH is an enhanced dedicated channel) and E-DCH Dedicated Physical Control Channel (E-DPCCH for short). The downlink primary carrier and the downlink auxiliary carrier set their respective E-DCH Absolute Grant Channel (E-AGCH for short), E-DCH Relative Grant Channel (E-RGCH for short) and E-DCH HARQ Acknowledgement Indicator Channel (E-HICH for short). The uplink primary carrier corresponds to the downlink primary carrier, and the uplink auxiliary carrier corresponds to the downlink auxiliary carrier. The primary carriers and the auxiliary carriers are independently scheduled respectively. A UE having the capability of transmitting the DC-HSUPA can transmit HSUPA data on the uplink primary carrier and the uplink auxiliary carrier simultaneously.

If only one uplink carrier is allocated to the terminal, this uplink carrier is an uplink primary carrier. When a plurality of uplink carriers are allocated to the terminal, the carrier which carries the high-speed downlink shared channel is a downlink primary carrier, and the carrier corresponding to the downlink primary carrier is an uplink primary carrier. According to the definition of the uplink primary carrier, its corresponding service high-speed downlink shared channel cell is determined by the downlink primary carrier.

In order to implement the DC-HSUPA function, the radio network control entity allocates additional enhanced data channel cell information wireless link setup request information element to a NodeB having the capability of processing the DC-HSUPA. The information carried by the additional enhanced data channel cell information wireless link setup request information element primarily includes a multicell E-DCH transport bearer mode and an additional E-DCH cell information setup. The additional E-DCH cell information setup includes additional E-DCH FDD setup information and multicell E-DCH information. The additional E-DCH FDD setup information is comprised of uplink dedicated physical channel information, additional E-DCH RL specific information to setup, additional E-DCH FDD information and F-DPCH information. The additional E-DCH RL specific information to setup is additional E-DCH RL specific information, which is denoted as uplink auxiliary carrier information. The uplink auxiliary carrier information contains of additional E-DCH RL specific information entry 1 and additional E-DCH RL specific information entry 2. The additional E-DCH RL specific information entry 1 contains an additional E-DCH RL identifier, a cell identifier, the first wireless link set indication, propagation delay, initial downlink transmission power, primary common pilot control channel signal to noise ratio, downlink channel power offsets, and additional E-DCH media access control dedicated stream pecific information. The additional E-DCH RL specific information entry 2 is multicell E-DCH RL specific information.

For a dual-carrier system, there are only one downlink auxiliary carrier and one uplink auxiliary carrier, which are paired directly, that is, the cell to which a downlink auxiliary cell corresponds is the cell to which an uplink auxiliary cell corresponds, and uplink and downlink frequency information of the uplink auxiliary cell is frequency information of the uplink auxiliary carrier and the downlink auxiliary carrier.

The air interface refers to an interface between a terminal (UE) and an access network (UTRAN), which is called as a Uu interface for short, and is often also called as a radio interface. The radio interface protocol is primarily used to set up, reconfigure and release various radio bearer services.

In order to implement the DC-HSUPA function, a radio network control entity allocates uplink auxiliary cell information to a terminal having the capability of receiving the DC-HSUPA on the air interface. The so-called uplink auxiliary cell information primarily includes the selected configuration information (a maintaining tag or a new configuration tag). The new configuration information includes auxiliary service enhanced data channel cell information, auxiliary enhanced data channel information common part, and downlink information of each wireless link list on the secondary uplink frequency. The auxiliary enhanced data channel information common part includes such parameters as frequency information, scrambling code type, scrambling code number, 2 ms scheduling, transport, and grant HARQ processing allocation, service grant, initial service grant value, primary/auxiliary grant selector, minimum reduction E-DPDCH gain factor, E-DCH minimum set E-DCH Transport Format Combination Indicator (E-TFCI), power offset of a Dedicated Physical Control Channel (DPCCH) for the secondary uplink frequency, and Power Control (PC) preamble. Frequency information of frequency duplex multiplexing includes indication of the UARFCN of the uplink auxiliary carrier and indication of the UARFCN of the downlink auxiliary carrier.

With the development of technologies, it is desirable that the multi-carrier high-speed downlink packet access technology is introduced into existing systems such that the terminal can transmit data on two or more carriers using the high-speed downlink packet access technology, so that the downlink data rate can be doubled and the number of corresponding uplink carriers can be one to four.

For the multi-carrier high-speed downlink packet access technology, there are at least two downlink auxiliary carriers in addition to the downlink primary carrier, and there are at most three downlink auxiliary carriers, and thus, the uplink auxiliary cell can not be determined according to the downlink auxiliary cell. Therefore, the uplink auxiliary carrier is unaware which downlink auxiliary carrier the uplink auxiliary cell is paired with.

### Summary of the Invention

The technical problem to be solved by the present invention is to provide a method, a NodeB and a system for transmitting pairing information of auxiliary carriers so as to implement flexible configuration of uplink and downlink auxiliary carriers.

In order to solve the above technical problem, the present invention provides a method for transmitting pairing information of auxiliary carriers comprising:
during the process of controlling a terminal which uses a multi-carrier high-speed packet access technique, a NodeB to which the terminal belongs setting pairing information of an uplink auxiliary carrier and a downlink auxiliary carrier of an auxiliary service enhanced dedicated channel cell for the terminal, and transmitting the paring information to a radio network control entity through control signaling transmitted via an Interconnection of type (IUB) interface.

Preferably, the method further comprises: the radio network control entity determining whether the paring information is valid after obtaining the pairing information, and transmitting the paring information which is determined to be valid to the terminal.

Preferably, when the NodeB to which the terminal belongs sets the pairing information of the uplink auxiliary carrier and downlink auxiliary carrier of the auxiliary service enhanced dedicated channel cell for the terminal, the NodeB selects a downlink auxiliary carrier with higher channel quality than a predetermined threshold, uses a service high-speed downlink shared channel cells to which the downlink auxiliary carrier corresponds as an auxiliary service enhanced dedicated channel cell, and uses the uplink frequency of the service high-speed downlink shared channel cell to which the downlink auxiliary carrier corresponds as the frequency of the uplink auxiliary carrier.

Preferably, the paring information of the uplink auxiliary carrier and the downlink auxiliary carrier include frequency information of the paired uplink auxiliary carrier and downlink auxiliary carrier, or a wireless link identifier of the auxiliary service enhanced dedicated channel cell, or a cell identifier of the auxiliary service enhanced dedicated channel cell.

Preferably, the control process and the control signaling in the control process are any of the following: when the control process is a wireless link setup process, the control signaling is a wireless link setup response message; when the control process is a wireless link adding process, the control signaling is a wireless link adding response message; when the control process is a wireless link deletion process, the control signaling is a wireless link deletion response message; and when the control process is a wireless link reconfiguration process, the control signaling is a wireless link reconfiguration completion message.

Preferably, when the NodeB transmits the paring information to the radio network control entity through the control signaling transmitted via the IUB interface, the paring information is carried in an additional enhanced dedicated channel cell information response information element in the wireless link setup response message when the control process is the wireless link adding process.

Preferably, when the NodeB transmits the paring information to the radio network control entity through the control signaling transmitted via the IUB interface, the paring information is carried in an additional enhanced dedicated channel cell information response information element in the wireless link reconfiguration completion message when the control process is the wireless link reconfiguration process.

Preferably, the wireless access network control entity includes a serving radio network controller; when the NodeB to which the terminal belongs sets the pairing information of the uplink auxiliary carrier and downlink auxiliary carrier of the auxiliary service enhanced dedicated channel cell for the terminal and transmits the paring information to the radio network control entity through the control signaling transmitted via the IUB interface, the NodeB transmits the paring information to the serving radio network controller through a NodeB Application Part (NBAP) protocol layer via the IUB interface.

Preferably, the wireless access network control entity includes a drift radio network controller and a serving radio network controller; when the NodeB to which the terminal belongs sets the pairing information of the uplink auxiliary carrier and downlink auxiliary carrier of the auxiliary service enhanced dedicated channel cell for the terminal and transmits the paring information to the radio network control entity through the control signaling transmitted via the IUB interface, the NodeB transmits the paring information to the drift radio network controller through the NBAP protocol layer via the IUB interface, and the drift radio network controller transmits the paring information to the serving radio network controller through a Radio Network Subsystem Application Part (RNSAP) protocol layer via the IUB interface.

In order to solve the above technical problem, the present invention further provides a NodeB for transmitting pairing information of auxiliary carriers comprising a pairing information setting module and a paring information transmitting module, wherein
the paring information setting module is configured to set pairing information of an uplink auxiliary carrier and a downlink auxiliary carrier of an auxiliary service enhanced dedicated channel cell for a terminal during the process of controlling the terminal which uses a multi-carrier high-speed packet access technique, and
the paring information transmitting module is configured to transmit the paring information set by the paring information setting module to a radio network control entity through control signaling transmitted via an IUB interface.

Preferably, the paring information of the uplink auxiliary carrier and the downlink auxiliary carrier include frequency information of the paired uplink auxiliary carrier and downlink auxiliary carrier, or a wireless link identifier of the auxiliary service enhanced dedicated channel cell, or a cell identifier of the auxiliary service enhanced dedicated channel cell.

Preferably, the control process and the control signaling in the control process are any of the following: when the control process is a wireless link setup process, the control signaling is a wireless link setup response message; when the control process is a wireless link adding process, the control signaling is a wireless link adding response message; when the control process is a wireless link deletion process, the control signaling is a wireless link deletion response message; and when the control process is a wireless link reconfiguration process, the control signaling is a wireless link reconfiguration completion message.

Preferably, the paring information is carried in an additional enhanced dedicated channel cell information response information element in the wireless link setup response message when the control process is the wireless link adding process.

Preferably, the paring information is carried in an additional enhanced dedicated channel cell information response information element in the wireless link reconfiguration completion message when the control process is the wireless link reconfiguration process.

In order to solve the above technical problem, the present invention further provides a system for transmitting pairing information of auxiliary carriers comprising a NodeB and a radio network control entity, wherein
the NodeB is configured to set pairing information of an uplink auxiliary carrier and a downlink auxiliary carrier of an auxiliary service enhanced dedicated channel cell for a terminal controlled by the NodeB and using a multi-carrier high-speed packet access technique during the process of controlling the terminal and transmit the paring information to the radio network control entity through control signaling transmitted via an IUB interface; and
the radio network control entity is configured to determine whether the paring information is valid after obtaining the paring information and transmit the paring information which is determined to be valid to the terminal.

Preferably, the NodeB comprises a pairing information setting module and a paring information transmitting module, wherein the paring information setting module is configured to set the pairing information of the uplink auxiliary carrier and downlink auxiliary carrier of the auxiliary service enhanced dedicated channel cell for the terminal during the process of controlling the terminal which uses the multi-carrier high-speed packet access technique, and the paring information transmitting module is configured to transmit the paring information set by the paring information setting module to the radio network control entity through control signaling transmitted via the IUB interface.

Preferably, the paring information of the uplink auxiliary carrier and the downlink auxiliary carrier include frequency information of the paired uplink auxiliary carrier and downlink auxiliary carrier, or a wireless link identifier of the auxiliary service enhanced dedicated channel cell, or a cell identifier of the auxiliary service enhanced dedicated channel cell.

Preferably, the control process and the control signaling in the control process are any of the following: when the control process is a wireless link setup process, the control signaling is a wireless link setup response message; when the control process is a wireless link adding process, the control signaling is a wireless link adding response message; when the control process is a wireless link deletion process, the control signaling is a wireless link deletion response message; and when the control process is a wireless link reconfiguration process, the control signaling is a wireless link reconfiguration completion message.

Preferably, the paring information is carried in an additional enhanced dedicated channel cell information response information element in the wireless link setup response message when the control process is the wireless link adding process.

Preferably, the paring information is carried in an additional enhanced dedicated channel cell information response information element in the wireless link reconfiguration completion message when the control process is the wireless link reconfiguration process.

In conclusion, in accordance with the present invention, paring information of an uplink auxiliary carrier and a certain downlink auxiliary carrier set by a NodeB is transmitted to a radio network controller through control signaling such that the radio network controller can obtain the paring information of the auxiliary carriers so solve the problem of being unable to configure the paring information of the uplink and downlink auxiliary carriers flexibly based on the IUR/IUB interface.

### Brief Description of Drawings

Fig. 1 is a schematic diagram of a specific carrier according to the first embodiment of the present invention;
Fig. 2 is a schematic diagram of a specific processing procedure according to the first embodiment of the present invention;
Fig. 3 is a schematic diagram of a specific carrier according to the second embodiment of the present invention;
Fig. 4 is a schematic diagram of a specific processing procedure according to the second embodiment of the present invention;
Fig. 5 is a schematic diagram of a specific carrier according to the third embodiment of the present invention; and
Fig. 6 is a schematic diagram of a specific processing procedure according to the third embodiment of the present invention.

### Preferred Embodiments of the Present Invention

Some terms appearing herein will be explained hereinafter. The service high-speed downlink shared channel wireless link includes all high-speed physical downlink shared channels allocated to a terminal, and a carrier to which the service high-speed downlink shared channel wireless link corresponds is a downlink primary carrier. The service high-speed downlink shared channel cell to which the downlink primary carrier corresponds is a downlink primary cell. The downlink primary cell is used for transmitting and receiving service high-speed downlink shared channel wireless link data to and from a certain terminal. A uplink primary cell to which the downlink primary cell corresponds is a service enhanced dedicated channel cell, and the bearing frequency in the uplink primary cell is an uplink primary carrier. The service high-speed downlink shared channel cell to which a downlink auxiliary carrier corresponds is a downlink auxiliary cell. A cell in which the terminal receives absolute grant from a NodeB on the downlink auxiliary carrier is an auxiliary service enhanced dedicated channel cell, and is also called as an uplink auxiliary cell. The frequency of the downlink primary carrier is a primary downlink frequency. The frequency of the uplink primary carrier is a primary uplink frequency. The frequency of the downlink auxiliary carrier is an secondary downlink frequency. The frequency of the uplink auxiliary carrier is an secondary uplink frequency.

The inventive concept of the present invention is that during the process of controlling a terminal which uses a multi-carrier high-speed packet access technique, a NodeB to which the terminal belongs sets pairing information of an uplink auxiliary carrier and a downlink auxiliary carrier of an auxiliary service enhanced dedicated channel cell (uplink auxiliary cell) for the terminal, and transmits the paring information to a radio network control entity through control signaling transmitted via an IUB interface.

The radio network control entity determines whether the paring information is valid after obtaining the pairing information, and transmits the paring information which is determined to be valid to the terminal. After making the determination for the uplink auxiliary cells, the terminal can transmit uplink data through the uplink auxiliary carrier. If the paring information is within the scope configured by the radio network control entity, it is shown that the paring information is valid; otherwise, it is shown that the paring information is invalid.

The NodeB selects a downlink auxiliary carrier with higher channel quality than a predetermined threshold (i.e., the channel quality is good), and then uses the uplink frequency of a cell to which the downlink auxiliary carrier corresponds as the frequency of the uplink auxiliary carrier, i.e., using a service high-speed downlink shared channel cell (i.e., downlink auxiliary cell) to which the downlink auxiliary carrier corresponds the uplink auxiliary cell. The signal quality threshold refers to a threshold of a parameter related to the signal quality, for example, the magnitude of the transmission power of the Dedicated Physical Control Channel (DPCCH) of the carrier can be used as a signal quality parameter. The smaller the transmission power of the DPCCH is, the better the channel quality is. Or, the uplink frequency of a cell to which the downlink auxiliary carrier with the highest priority corresponds can also be used as the frequency of the uplink auxiliary carrier.

The paring information of the uplink auxiliary carrier and the downlink auxiliary carrier described above includes frequency information of the paired uplink auxiliary carrier and downlink auxiliary carrier (as shown in Table 1), or a wireless link identifier of the uplink auxiliary cell, or a cell identifier of the uplink auxiliary cell.

**Table 1 Paring information of auxiliary carriers**

| **IE/Group Name** | **Presence** | **IE Type and Reference** |
|---|---|---|
| selection mode | Must be selected | |
| >frequency division multiplexing duplex | | |
| >>uplink UARFCN | Optional | Integer(0..16383) |
| >>downlink UARFCN | Must be selected | Integer(0 .. 16383) |
| >TDD | | |
| >>UARFCN | Must be selected | Integer(0 .. 16383) |

Preferably, the NodeB transmits the paring information to a radio network control entity when returning a response to the radio network control entity. The process of controlling the terminal includes a wireless link setup process, a wireless link adding process, a wireless link deletion process and a wireless link reconfiguration process. Accordingly, the control signaling transmitted by the NodeB to the radio network control entity as a response is a wireless link setup response message, a wireless link adding response message, a wireless link deletion response message and a wireless link reconfiguration completion message. During the control processes described above, the NodeB can configure the uplink auxiliary cell relatively flexible and simply without influencing the existing procedure.

Preferably, the paring information can be added to an additional E-DCH cell information response information element in the wireless link setup response message, as shown in Table 2.

**Table 2 Additional E-DCH cell information response information element in the wireless link setup response**

| **IE/Group Name** | **Presence** | **Range** | **IE Type and Reference** | **Semantic Description** | **Criticality** | **Assigned Criticality** |
|---|---|---|---|---|---|---|
| additional E-DCH cell information response | | *0..* <*maxnoo ƒEDCH-1*> | | E-DCH on secondary uplink frequency-max 1 in this 3GPP release. | each | ignore |
| >additional E-DCH FDD information response | Must be selected | | 9.2.2.135 | | - | |
| >additional E-DCH service cell change information response | Optional | | E-DCH service cell change information response 9.2.2.18Ed | | - | |
| >auxiliary carrier paring information | Must be selected | | | | | |

Preferably, the paring information can be added to the additional E-DCH cell information response information element in the wireless link reconfiguration completion message, as shown in Table 3.

**Table 3 Additional E-DCH cell information response information element in the wireless link reconfiguration completion message**

| **IE/Group Name** | **Presence** | **Range** | **IE Type and Reference** | **Semantic Description** | **Criticality** | **Assigned Criticality** |
|---|---|---|---|---|---|---|
| additional E-DCH cell information response | | *0..* <*max nooƒED CH-1*> | | E-DCH on secondary uplink frequency-max 1 in this 3GPP release. | each | ignore |
| >additional E-DCH FDD information response | Must be selected | | 9.2.2.135 | | - | |
| >auxiliary carrier paring information | Optional | | | | | |

Position of paring information of auxiliary carriers in other control signaling may be obtained by making reference to the messages described above.

The radio access network control entity includes a serving radio network controller; and the NodeB transmits the paring information to the serving radio network controller through a NBAP protocol layer via the IUB interface.

The wireless access network control entity includes a drift radio network controller and a serving radio network controller; and the NodeB transmits the paring information to the drift radio network controller through a NBAP protocol layer via the IUB interface, and the drift radio network controller transmits the paring information to the serving radio network controller through a RNSAP protocol layer via the IUR interface.

The implementation of the technical scheme of the present invention will be further described in detail hereinafter in combination with accompanying drawings. It will be described hereinafter by taking the transmission of the paring information to the radio network controller during the wireless link adding process, the wireless link setup process and the wireless link reconfiguration process respectively as examples. Configuration in other control processes may be obtained by making reference to the following procedure and will not be repeated herein.

### The first Embodiment

The present embodiment provides a method for transmitting and receiving data through two uplink carriers and three downlink carriers simultaneously and for transmitting paring information when uplink frequencies of two auxiliary cells are the same.

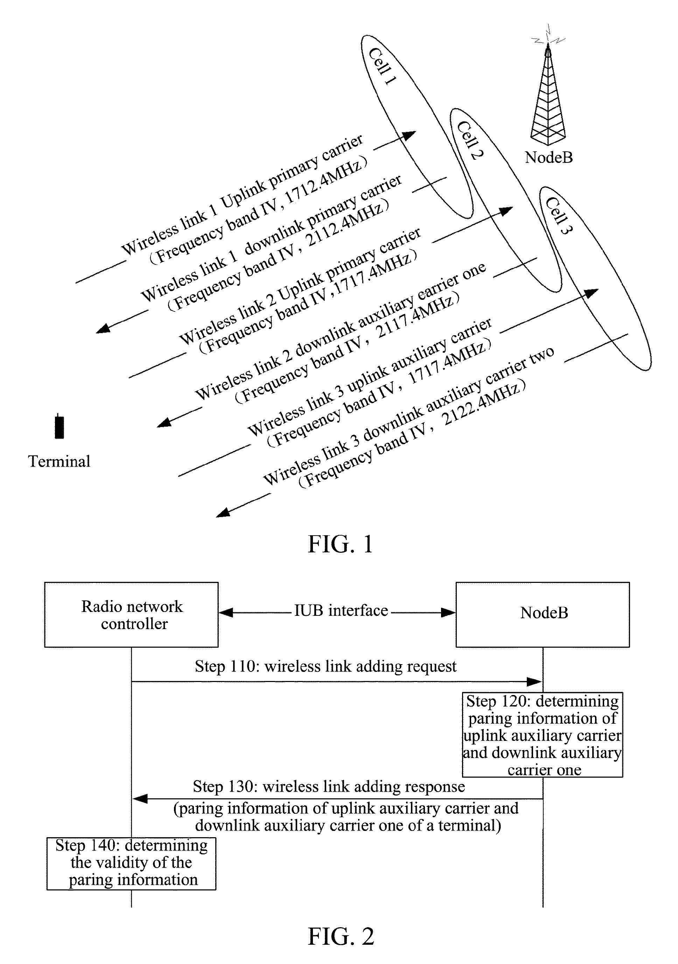

A scene where both the two uplink carriers and the three downlink carriers belong to the same operating frequency band IV is set. The UARFCN of the uplink primary carrier is 1312 (1712.4 MHz), the UARFCN of the uplink auxiliary carrier is 1337 (1717.4 MHz), and the uplink primary carrier and the uplink auxiliary carrier are adjacent carriers within the operating frequency band IV. The UARFCN of downlink auxiliary carrier one is 1537 (2112.4 MHz), the UARFCN of downlink auxiliary carrier two is 1562 (2117.4 MHz), the UARFCN of downlink auxiliary carrier three is 1587 (2122.4 MHz), and downlink carrier one, downlink carrier two and downlink carrier three are adjacent carriers within the operating frequency band IV. The downlink primary carrier, downlink auxiliary carrier one and downlink auxiliary carrier two are adjacent carriers within the operating frequency band IV. The uplink primary carrier and the downlink primary carrier compose a cell with the identifier being 1, and their wireless link identifier is 1; downlink auxiliary carrier one and the uplink auxiliary carrier compose a cell with the identifier being 2, and their wireless link identifier is 2; and downlink auxiliary carrier two and the uplink auxiliary carrier compose a cell with the identifier being 3 and their wireless link identifier is 3, as shown in Fig. 1.

As shown in Fig. 2, the method for transmitting paring information comprises the following steps.

Step 110: a radio network controller transmits a wireless link adding request message to a NodeB.

Step 120: the NodeB learns that the DPCCH value of downlink auxiliary carrier one is minimum based on the DPCCH transmission power of the downlink auxiliary carrier, and uses a uplink frequency point of a cell to which downlink auxiliary carrier one corresponds as a frequency point of the uplink auxiliary carrier to obtain paring information of the uplink auxiliary carrier and downlink auxiliary carrier one.

The adding of the wireless link is implemented using existing methods, is not the key point of the present invention, and will not be repeated herein.

Step 130: the NodeB transmits a wireless link adding response message carrying frequency information, i.e., the uplink UARFCN being 1337 and the downlink UARFCN being 1537, of the paired uplink auxiliary carrier and downlink auxiliary carrier one of a terminal to the radio network controller via the IUB interface through the NBAP layer.

Step 140: the radio network controller receives the wireless link adding response message, determines whether the pairing configuration of the uplink auxiliary carrier and downlink auxiliary carrier one of the terminal is valid, and transmits the paring information which is determined to be valid to the terminal.

The radio network controller determines whether both the frequency information of the uplink auxiliary carrier and the frequency information of its paired downlink auxiliary carrier one are within the configuration of the radio network controller, and if yes, the paring configuration of the uplink auxiliary carrier and downlink auxiliary carrier one of the terminal is valid, and the related paring configuration information is updated and stored; otherwise, the paring configuration of the uplink auxiliary carrier and downlink auxiliary carrier one of the terminal is invalid, and the original configuration information is maintained.

The radio network controller is not required to transmit the paring information to the terminal immediately after determining that the paring information is valid, but it can transmit the paring information in the procedure specified in the protocol.

### The second embodiment

The present embodiment provides a method for transmitting and receiving data through two uplink carriers and three downlink carriers simultaneously and for transmitting paring information when uplink frequencies of two auxiliary cells are different.

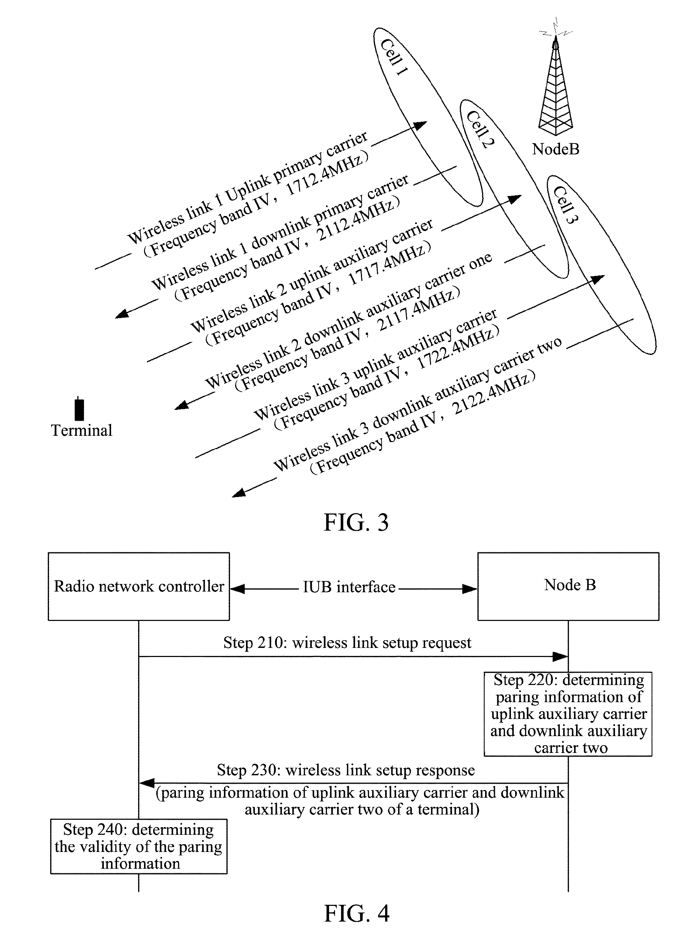

A scene where both the two uplink carriers and the three downlink carriers belong to the same operating frequency band IV is set. The UARFCN of the uplink primary carrier is 1312 (1712.4 MHz), the UARFCN of the uplink auxiliary carrier is 1337 (1717.4 MHz), and the uplink primary carrier and the uplink auxiliary carrier are adjacent carriers within the operating frequency band IV. The UARFCN of downlink auxiliary carrier one is 1537 (2112.4 MHz), the UARFCN of downlink auxiliary carrier two is 1562 (2117.4 MHz), the UARFCN of downlink auxiliary carrier three is 1587 (2122.4 MHz), and downlink carrier one, downlink carrier two and downlink carrier three are adjacent carriers within the operating frequency band IV. The downlink primary carrier, downlink auxiliary carrier one and downlink auxiliary carrier two are adjacent carriers within the operating frequency band IV. The uplink primary carrier and the downlink primary carrier compose a cell with the identifier being 1, and their wireless link identifier is 1; downlink auxiliary carrier one and the uplink auxiliary carrier compose a cell with the identifier being 2, and their wireless link identifier is 2; and downlink auxiliary carrier two and the uplink auxiliary carrier compose a cell with the identifier being 3 and their wireless link identifier is 3, as shown in Fig. 3.

As shown in Fig. 4, the method for transmitting paring information comprises the following steps.

Step 210: a radio network controller transmits a wireless link setup request message for a terminal to a NodeB.

Step 220: the NodeB learns that the DPCCH value of downlink auxiliary carrier two is minimum based on the DPCCH transmission power of the downlink auxiliary carrier, and uses a uplink frequency point of a cell to which downlink auxiliary carrier two corresponds as a frequency point of the uplink auxiliary carrier to obtain paring information of the uplink auxiliary carrier and downlink auxiliary carrier two.

The setup of the wireless link is implemented using existing methods, is not the key point of the present invention, and will not be repeated herein.

Step 230: the NodeB transmits a wireless link setup response message carrying frequency information, i.e., the uplink UARFCN being 1337 and the downlink UARFCN being 2237, of the paired uplink auxiliary carrier and downlink auxiliary carrier two of the terminal to the radio network controller via the IUB interface through the NBAP layer.

Step 240: the radio network controller receives the wireless link setup response message, determines whether the pairing configuration of the uplink auxiliary carrier and downlink auxiliary carrier two of the terminal is valid, and transmits the paring information which is determined to be valid to the terminal.

The radio network controller determines whether both the frequency information of the uplink auxiliary carrier and the frequency information of its paired downlink auxiliary carrier two are within the configuration of the radio network controller, and if yes, the paring configuration of the uplink auxiliary carrier and downlink auxiliary carrier two of the terminal is valid, and the related paring configuration information is updated and stored; otherwise, the paring configuration of the uplink auxiliary carrier and downlink auxiliary carrier two of the terminal is invalid, and the original configuration information is maintained.

### The third embodiment

The present embodiment provides a method for transmitting and receiving data through two uplink carriers and three downlink carriers simultaneously and for transmitting paring information.

A scene where the two uplink carriers, the downlink primary carrier and downlink auxiliary one belong to the same operating frequency band IV is set. Downlink auxiliary carrier two and downlink auxiliary three belong to the same operating frequency band VII. The UARFCN of the uplink primary carrier is 1312 (1712.4 MHz), the UARFCN of the uplink auxiliary carrier is 1337 (1717.4 MHz), and the downlink primary carrier and the downlink auxiliary carrier one are adjacent carriers within the operating frequency band IV. The UARFCN of the downlink primary carrier is 1537 (2112.4 MHz), the UARFCN of downlink auxiliary carrier one is 1562 (2117.4 MHz), and the downlink primary carrier and downlink auxiliary carrier one are adjacent carriers within the operating frequency band IV. The UARFCN of downlink auxiliary carrier two is 2237 (2622.4 MHz), the UARFCN of downlink auxiliary carrier three is 2262 (2628.4 MHz), and downlink primary carrier two and downlink auxiliary carrier three are adjacent carriers within the operating frequency band VII. The uplink primary carrier and the downlink primary carrier compose a cell with the identifier being 1, and their wireless link identifier is 1; downlink auxiliary carrier one and the uplink auxiliary carrier compose a cell with the identifier being 2, and their wireless link identifier is 2; downlink auxiliary carrier two and the uplink auxiliary carrier compose a cell with the identifier being 3 and their wireless link identifier is 3; and downlink auxiliary carrier three and the uplink auxiliary carrier compose a cell with the identifier being 4 and their wireless link identifier is 4, as shown in Fig. 4.

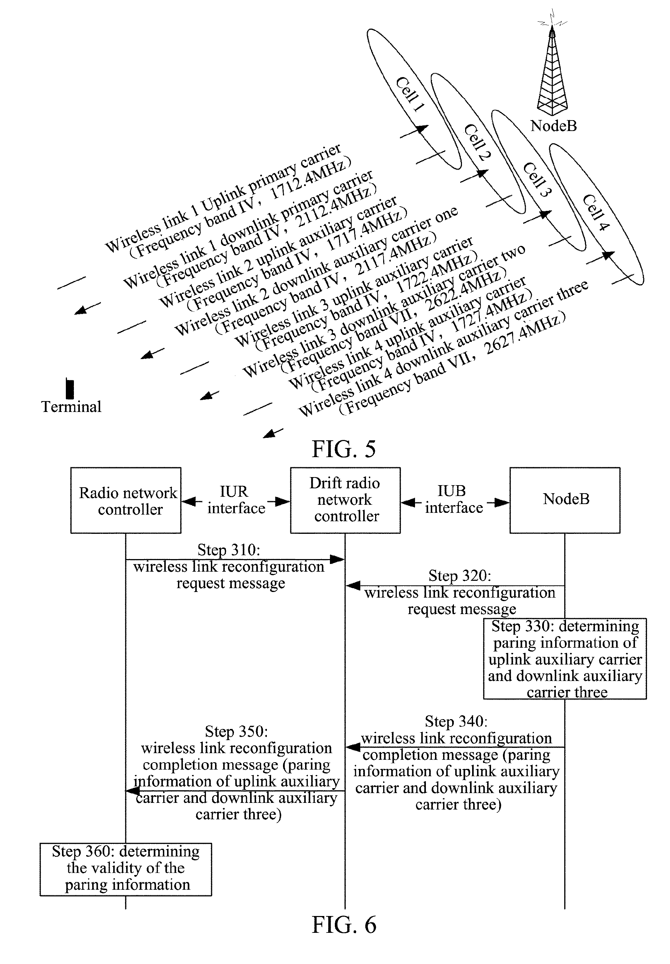

The present invention is described by taking a drift radio network controller used as a relay as an example. As shown in Fig. 6, the method for transmitting paring information comprises the following steps.

Step 310: a serving radio network controller transmits a wireless link reconfiguration request message to a drift radio network controller.

Step 320: the drift radio network controller transmits the wireless link reconfiguration request message to a NodeB.

Step 330: the NodeB determines that downlink auxiliary three is the paired carrier of the uplink auxiliary carrier, and uses an uplink frequency point of a cell to which downlink carrier three corresponds as a frequency point of the uplink auxiliary carrier.

The reconfiguration of the wireless link is implemented using existing methods, is not the key point of the present invention, and will not be repeated herein.

Step 340: the NodeB transmits a wireless link reconfiguration completion message carrying frequency information, i.e., the uplink UARFCN being 1337 and the downlink UARFCN being 2262, of the uplink auxiliary carrier and downlink auxiliary carrier three of the terminal to the drift radio network controller via the IUB interface through the NBAP layer.

Step 350: the drift radio network controller transmits the wireless link reconfiguration completion message carrying the frequency information of the uplink auxiliary carrier and downlink auxiliary carrier three of the terminal to the serving radio network controller via the IUR interface through the RNSAP layer.

Step 360: the radio network controller receives the wireless link reconfiguration completion message, determines whether the pairing configuration of the uplink auxiliary carrier and downlink auxiliary carrier three of the terminal is valid, and transmits the paring information which is determined to be valid to the terminal.

The radio network controller determines whether both the frequency information of the uplink auxiliary carrier and the frequency information of its paired downlink auxiliary carrier three are within the configuration of the radio network controller, and if yes, the paring configuration of the uplink auxiliary carrier and downlink auxiliary carrier three of the terminal is valid, and the related paring configuration information is updated and stored; otherwise, the paring configuration of the uplink auxiliary carrier and downlink auxiliary carrier three of the terminal is invalid, and the original configuration information is maintained.

The NodeB for implementing the method describe above comprises a paring information setting module and a paring information transmitting module, wherein
the paring information setting module is configured to set pairing information of an uplink auxiliary carrier and a downlink auxiliary carrier of an auxiliary service enhanced dedicated channel cell for a terminal during the process of controlling the terminal which uses a multi-carrier high-speed packet access technique, and
the paring information transmitting module is configured to transmit the paring information set by the paring information setting module to a radio network control entity through control signaling transmitted via an IUB interface.

A system for implementing the method described above comprises the described NodeB and a radio network control entity, wherein
the NodeB is configured to set pairing information of an uplink auxiliary carrier and a downlink auxiliary carrier of an auxiliary service enhanced dedicated channel cells for a terminal controlled by the NodeB and using a multi-carrier high-speed packet access technique during the process of controlling the terminal and transmit the paring information to the radio network control entity through control signaling transmitted via an IUB interface; and
the radio network control entity is configured to determine whether the paring information is valid after obtaining the paring information and transmit the paring information which is determined to be valid to the terminal.

The present invention provides a method for controlling, selecting flexibly and transmitting paring information of auxiliary carriers based on a NodeB by transmitting and receiving data through two uplink carriers and three or four downlink carriers. For a specified terminal, the NodeB sets, based on channel quality of each downlink auxiliary cell, pairing information of an uplink auxiliary carrier and a certain downlink auxiliary carrier dynamically to send to a radio network controller through control signaling of the IUB interface such that the radio network controller can obtain the paring information of the auxiliary carriers to send to a terminal so as to solve the problem of being unable to configure the uplink and downlink auxiliary carriers flexibly based on the IUR/IUB interface through signaling.

It can be understood by a person having ordinary skill in the art that all or some of the steps in the described method can be implemented by related hardware instructed by programs, which can be stored in a computer readable storage medium, such as a read-only memory, disk or CD-ROM, etc. Alternatively, all or some of the steps in the embodiments described above can also be implemented using one or more integrated circuits. Accordingly, each module/unit in the embodiments described above can be implemented in a form of hardware, or software functional module. The present invention is not limited to combinations of any particular forms of hardware and software.

### Industrial Applicability

The method, the NodeB and the system for transmitting pairing information of auxiliary carriers in accordance with the present invention allow the NodeB to select the pairing information of the auxiliary carriers flexibly and transmit the paring information to the radio network controller such that the radio network controller can obtain the paring information of the auxiliary carriers and then transmit the paring information to the terminal, thus better implementing the flexible configuration of the uplink and downlink auxiliary carriers.

## Claims

1. A method for transmitting pairing information of auxiliary carriers comprising:
during the process of controlling a terminal which uses a multi-carrier high-speed packet access technique, a NodeB to which the terminal belongs setting pairing information of an uplink auxiliary carrier and a downlink auxiliary carrier of a auxiliary service enhanced dedicated channel cell for the terminal, and transmitting the paring information to a radio network control entity through control signaling transmitted via an Interconnection of type (IUB) interface.

2. The method according to claim 1, further comprising:
the radio network control entity determining whether the paring information is valid after obtaining the pairing information, and transmitting the paring information which is determined to be valid to the terminal.

3. The method according to claim 1 or 2, wherein when the NodeB to which the terminal belongs sets the pairing information of the uplink auxiliary carrier and downlink auxiliary carrier of the auxiliary service enhanced dedicated channel cell for the terminal,
the NodeB selects a downlink auxiliary carrier with higher channel quality than a predetermined threshold, uses a service high-speed downlink shared channel cells to which the downlink auxiliary carrier corresponds as an auxiliary service enhanced dedicated channel cell, and uses the uplink frequency of the service high-speed downlink shared channel cell to which the downlink auxiliary carrier corresponds as the frequency of the uplink auxiliary carrier.

4. The method according to claim 1 or 2, wherein
the paring information of the uplink auxiliary carrier and the downlink auxiliary carrier include frequency information of the paired uplink auxiliary carrier and downlink auxiliary carrier, or a wireless link identifier of the auxiliary service enhanced dedicated channel cell, or a cell identifier of the auxiliary service enhanced dedicated channel cell.

5. The method according to claim 1, wherein
the control process and the control signaling in the control process are any of the following:
when the control process is a wireless link setup process, the control signaling is a wireless link setup response message;
when the control process is a wireless link adding process, the control signaling is a wireless link adding response message;
when the control process is a wireless link deletion process, the control signaling is a wireless link deletion response message; and
when the control process is a wireless link reconfiguration process, the control signaling is a wireless link reconfiguration completion message.

6. The method according to claim 5, wherein when the NodeB transmits the paring information to the radio network control entity through the control signaling transmitted via the IUB interface,
the paring information is carried in an additional enhanced dedicated channel cell information response information element in the wireless link setup response message when the control process is the wireless link adding process.

7. The method according to claim 5, wherein when the NodeB transmits the paring information to the radio network control entity through the control signaling transmitted via the IUB interface,
the paring information is carried in an additional enhanced dedicated channel cell information response information element in the wireless link reconfiguration completion message when the control process is the wireless link reconfiguration process.

8. The method according to claim 1 or 2, wherein
the wireless access network control entity includes a serving radio network controller; and
when the NodeB to which the terminal belongs sets the pairing information of the uplink auxiliary carrier and downlink auxiliary carrier of the auxiliary service enhanced dedicated channel cell for the terminal and transmits the paring information to the radio network control entity through the control signaling transmitted via the IUB interface, the NodeB transmits the paring information to the serving radio network controller through a NodeB Application Part (NBAP) protocol layer via the IUB interface.

9. The method according to claim 1 or 2, wherein
the wireless access network control entity includes a drift radio network controller and a serving radio network controller; and
when the NodeB to which the terminal belongs sets the pairing information of the uplink auxiliary carrier and downlink auxiliary carrier of the auxiliary service enhanced dedicated channel cell for the terminal and transmits the paring information to the radio network control entity through the control signaling transmitted via the IUB interface, the NodeB transmits the paring information to the drift radio network controller through the NBAP protocol layer via the IUB interface, and the drift radio network controller transmits the paring information to the serving radio network controller through a Radio Network Subsystem Application Part (RNSAP) protocol layer via the IUB interface.

10. A NodeB for transmitting pairing information of auxiliary carriers comprising a pairing information setting module and a paring information transmitting module, wherein
the paring information setting module is configured to set pairing information of an uplink auxiliary carrier and a downlink auxiliary carrier of an auxiliary service enhanced dedicated channel cell for a terminal during the process of controlling the terminal which uses a multi-carrier high-speed packet access technique, and
the paring information transmitting module is configured to transmit the paring information set by the paring information setting module to a radio network control entity through control signaling transmitted via an IUB interface.

11. A system for transmitting pairing information of auxiliary carriers comprising a NodeB and a radio network control entity, wherein
the NodeB is configured to set pairing information of an uplink auxiliary carrier and a downlink auxiliary carrier of an auxiliary service enhanced dedicated channel cell for a terminal controlled by the NodeB and using a multi-carrier high-speed packet access technique during the process of controlling the terminal and transmit the paring information to the radio network control entity through control signaling transmitted via an IUB interface; and
the radio network control entity is configured to determine whether the paring information is valid after obtaining the paring information and transmit the paring information which is determined to be valid to the terminal.
